# EUROPÄISCHE PATENTSCHRIFT

(11) **EP 3 221 190 B1**
(45) Veröffentlichungstag und Bekanntmachung des Hinweises auf die Patenterteilung: **10.10.2018**
(21) Anmeldenummer: 15790462.4
(22) Anmeldetag: 29.10.2015
(51) Int. Cl.: B60R 11/04, G06K 9/00

(54) **KRAFTFAHRZEUG**
VEHICLE
VÉHICULE AUTOMOBILE

(30) Priorität: 19.11.2014 DE 102014017128
(43) Veröffentlichungstag der Anmeldung: 27.09.2017
(73) Patentinhaber: Audi AG, 85045 Ingolstadt (DE)
(72) Erfinder: BOUZOURAA, Mohamed Essayed, 85051 Ingolstadt (DE)
(86) Internationale Anmeldenummer: PCT/EP2015/002161
(87) Internationale Veröffentlichungsnummer: WO 2016/078743

(56) Entgegenhaltungen:
- DE-A1-102004 045 741
- GIDEON P STEIN ET AL: "Stereo-Assist: Top-down stereo for driver assistance systems", INTELLIGENT VEHICLES SYMPOSIUM (IV), 2010 IEEE, IEEE, PISCATAWAY, NJ, USA, 21. Juni 2010 (2010-06-21), Seiten 723-730, XP031732180, ISBN: 978-1-4244-7866-8

## Beschreibung

Die Erfindung betrifft ein Kraftfahrzeug, mit einem Fahrerassistenzsystem umfassend eine Steuerungseinrichtung und eine das Fahrzeugvorfeld aufnehmende Kamera, deren Bilder seitens der Steuerungseinrichtung zur Erfassung von dem Betrieb des Fahrerassistenzsystem zugrunde zu legenden Informationen verarbeitbar sind.

Moderne Kraftfahrzeuge weisen in der Regel ein oder mehrere Fahrerassistenzsysteme auf, die der Längs- oder Querführung dienen, oder die der Warnung vor besonderen Verkehrssituationen dienen. Zu nennen ist beispielsweise ein adaptives Folgesystem, häufig auch ACC (Adaptive Cruise Control) genannt, ein Spurhaltesystem und Ähnliches. Vielen dieser Fahrerassistenzsysteme ist gemein, dass sie neben einer Steuerungseinrichtung auch eine das Fahrzeugvorfeld aufnehmende Kamera umfassen respektive sich einer solchen bedienen, wobei die Steuerung des Fahrerassistenzsystems respektive des Kraftfahrzeugs durch das Fahrerassistenzsystem basierend auf einer Auswertung der Kamerabilder erfolgt. Die Kamera stellt eine wichtige Informationsquelle für das Fahrerassistenzsystem dar. Sie ist üblicherweise unmittelbar hinter der Windschutzscheibe verbaut, so dass sie optimal das Fahrzeugvorfeld aufnehmen kann und etwaige vorausfahrende Fahrzeuge, Fahrbahnmarkierungen, Fahrbahnränder etc. in den Bildern enthalten sind. Die Steuerungseinrichtung extrahiert aus den aufgenommenen Bildern Informationen, die dem Betrieb des Fahrerassistenzsystem zugrunde gelegt werden, basierend auf welchen also die entsprechende Steuerung respektive der Eingriff oder die Warnsignalgabe etc. erfolgt.

Üblicherweise wird eine Mono-Kamera eingesetzt. Es ist auch bekannt, zwei Kameras fest zu verbauen, also eine Stereo-Kamera respektive ein StereoKamerasystem zu nutzen. Die beiden Kameras nehmen das Fahrzeugvorfeld aus geringfügig unterschiedlichen Positionen auf. Durch diese Stereoskopie ist es möglich, eine dreidimensionale Vorfelderfassung vorzunehmen, mithin also Tiefeninformationen zu ermitteln. Die Integration eines solchen fest verbauten Stereo-Kamerasystems ist jedoch aus mehrerlei Gründen problematisch. Zum einen wird dadurch, nachdem die beiden Kameras versetzt zueinander zu montieren sind, ein entsprechend großes Montagepanel benötigt, das im Bereich der Windschutzscheibe hinter den Rückspiegel zu montieren ist. Dies kann die Sicht des Fahrers beeinträchtigen. Darüber hinaus sind mit der Integration eines solchen Stereo-Kamerasystems höhere Kosten verbünden.

Der Erfindung liegt damit das Problem zugrunde, ein Kraftfahrzeug anzugeben, das auf einfach Weise die Gewinnung dreidimensionaler, stereoskopischer Informationen ermöglichen.

Zur Lösung dieses Problems ist bei einem Kraftfahrzeug der eingangs genannten Art erfindungsgemäß vorgesehen, dass eine mittels einer Halterung im Bereich der Windschutzscheibe fixierbare tragbare Bildaufnahmeeinrichtung über eine Kommunikationsverbindung durch die Steuerungseinrichtung zur Aufnahme von Bildern des Fahrzeugvorfelds, die zur Gewinnung von dreidimensionalen stereoskopischen Informationen zusammen mit Bildern der Kamera verarbeitbar sind, ansteuerbar ist.

Dem erfindungsgemäßen Kraftfahrzeug liegt die Überlegung zugrunde, kein fest verbautes Stereokamerasystem zu nutzen, sondern ein solches durch zusätzliche Integration einer beispielsweise dem Fahrer gehörenden, tragbaren Bildaufnahmeeinrichtung im Bedarfsfall aufzubauen. Hierzu wird die Bildaufnahmeeinrichtung mittels einer geeigneten Halterung im Bereich der Windschutzscheibe angeordnet, so dass die Bildaufnahmeeinrichtung das Fahrzeugvorfeld in ähnlicher Weise erfassen kann wie die fest verbaute Kamera. Die Positionen der Halterung kann der Fahrer letztlich beliebig wählen, so dass die Bildaufnahmeeinrichtung so positioniert werden kann, dass sie die Sicht nicht beeinträchtigt. Denkbar ist es beispielsweise diese Halterung und damit die Bildaufnahmeeinrichtung im Bereich der Beifahrerseite anzuordnen, so dass der Fahrer ungehinderte Sicht in seinem Bereich hat.

Zwischen der Bildaufnahmeeinrichtung und der Steuerungseinrichtung wird sodann eine Kommunikationsverbindung aufgebaut. D. h., die Steuerungseinrichtung synchronisiert sich in geeigneter Weise mit der Bildaufnahmeeinrichtung, so dass eine Steuerung der Bildaufnahmeeinrichtung über die Steuerungseinrichtung respektive ein Datenaustausch möglich ist. Insbesondere steuert respektive triggert die Steuerungseinrichtung den Bildaufnahmebetrieb und nimmt die Bildverarbeitung zumindest teilweise oder gänzlich vor, d. h., dass die entsprechenden Informationen der fest verbauten Kamera mit der Bildaufnahmeeinrichtung bei ihr zusammenfließen und zur nachfolgenden Steuerung verarbeitet werden.

Da aus unterschiedlichen Positionen aufgenommene Bilder vorliegen, kann eine stereoskopische Informationsgewinnung erfolgen, was es ermöglicht, dreidimensionale Informationen der Umgebung zu ermitteln, mithin also ein dreidimensionales Modell der Umgebung zu erstellen. Diese dreidimensionale Informationen dienen als Basis für die Assistenzsystemsteuerung, wobei anhand dieser dreidimensionalen Informationen auch Situationen über das Assistenzsystem erfasst respektive bearbeitet werden können, die bisher noch nicht über ein Assistenzsystem bedient werden können. Zu nennen ist beispielsweise ein Engstellenassistenzsystem, das den Fahrer unmittelbar vor und beim Befahren einer Engstelle unterstützt, wie sie sich beispielsweise in Folge einer baustellbedingten Fahrspurverschmälerung ergibt. Auch kann anhand solcher dreidimensionaler Informationen eine Unterfahrbarkeits- bzw. Überfahrbarkeitskontrolle erreicht werden, beispielsweise beim Unterfahren von Brücken oder Einfahren in ein Tunnel, was insbesondere im Transporter- oder LKW-Bereich von Wichtigkeit ist, oder beim Überfahren von größeren Fahrbahnunebenheiten, um ein Aufsetzen zu vermeiden.

Die Bildaufnahmeeinrichtung ist wie ausgeführt nicht fest verbaut, so dass das Stereoskopiesystem vom Fahrer bei Bedarf aufgebaut werden kann, wenn er eine Bildverarbeitungseinrichtung mit sich führt, was heutzutage häufig der Fall ist. Zum Aufbau des Stereoskopiesystems ist es lediglich erforderlich, die Bildaufnahmeeinrichtung zu positionieren und die Kommunikationsverbindung aufzubauen, worauf nachfolgend noch eingegangen wird, woraufhin das Fahrerassistenzsystem in diesem Stereoskopie-Modus arbeiten kann.

Die Bildaufnahmeeinrichtung ist gemäß einer besonders zweckmäßigen Weiterbildung der Erfindung bevorzugt eine Kamera eines Mobiltelefons. Derartige Mobiltelefone, üblicherweise Smartphones genannt, sind äußerst weit verbreitet. Sie verfügen über eine hinreichend leistungsfähige Kamera und eine eigene Steuerungseinrichtung, über welche das Mobiltelefon mit der fahrzeugseitigen Steuerungseinrichtung über die Kommunikationsverbindung respektive die Schnittstelle kommunizieren kann. Darüber hinaus sind entsprechende Halterungen für solche Mobiltelefone hinlänglich bekannt, da Mobiltelefone oft auch als Navigationshilfsmittel genutzt werden, wenn eine entsprechende Applikation vorhanden ist. Mit einer solchen Halterung, die beispielsweise über einen Saugfuß an der Windschutzscheibe befestigt werden kann, wäre es ohne Weiteres denkbar, das Mobiltelefon entsprechend zu positionieren, so dass über die Kamera das Fahrzeugvorfeld aufgenommen werden kann.

Alternativ zum Mobiltelefon wäre es grundsätzlich auch denkbar, eine kleine Digitalkamera als Bildaufnahmeeinrichtung zu verwenden. Häufig wird auch eine solche Digitalkamera, die ebenfalls oft nur wenige Zentimeter groß ist, mitgeführt. Auch sie kann als Bildaufnahmeeinrichtung verwendet werden.

Die Kommunikationsverbindung kann eine drahtlose Verbindung oder eine Kabelverbindung sein. Handelt es sich bei Bildaufnahmeeinrichtung um ein Mobiltelefon, so bietet sich eine drahtlose Verbindung an. Häufig ist ein Kraftfahrzeug mit einer geeigneten Funkschnittstelle beispielsweise in Form einer WLAN- oder Bluetooth-Schnittstelle ausgerüstet, um ein Mobiltelefon mit dem Fahrzeug zu koppeln und eine Freisprecheinrichtung zu realisieren. Eine solche Kopplung erfolgt oft auch automatisch beim Einsteigen in das Fahrzeug. Diese Schnittstelle kann nun gleichermaßen als Kommunikations-verbindung zwischen der Steuerungseinrichtung des Fahrerassistenzsystems und dem Mobiltelefon genutzt werden. Alternativ dazu besteht natürlich die Möglichkeit, über ein entsprechendes Kommunikationskabel eine physikalische Verbindung zwischen Mobiltelefon und Kraftfahrzeug zu realisieren. Selbstverständlich wird die Verbindung vom Mobiltelefon zu einem entsprechenden kraftfahrzeugseitigen Kommunikations- oder Datenbus aufgebaut, an dem unter anderem die Steuerungseinrichtung des Fahrerassistenzsystems hängt. Im Falle einer Digitalkamera bietet sich primär der Aufbau einer Kabelverbindung an. Diese kann bevorzugt eine USB-Verbindung sein. Mit dem Aufbau der Kommunikationsverbindung erkennt die Steuerungseinrichtung des Assistenzsystems automatisch die zusätzliche Kamera und schaltet automatisch in einen "Stereoskopie-Modus", stellt sich also automatisch auf die nun mögliche Gewinnung dreidimensionaler Informationen ein.

Gemäß einer ersten Erfindungsalternative können die aufgenommenen Bilder sowohl der Aufnahmeeinrichtung als auch der fest verbauten Kamera seitens der Steuerungseinrichtung gemeinsam verarbeitet werden. D. h., dass die vollständigen Bilddaten der Bildaufnahmeeinrichtung, also beispielsweise der Mobiltelefonkamera, sowie der fest verbauten Kamera direkt an die Steuerungseinrichtung gegeben werden, wo sie zur Gewinnung der dreidimensionalen Informationen verarbeitet werden.

Alternativ dazu ist es möglich, dass die aufgenommenen Bilder seitens der Steuerungseinrichtung der Bildaufnahmeeinrichtung, also beispielsweise der Steuerungseinrichtung des Mobiltelefons, zur Gewinnung von Vorverarbeitungsinformationen vorverarbeitet werden, wobei die Steuerungseinrichtung des Fahrerassistenzsystems die Vorverarbeitungsinformationen zusammen mit den Bildern der Kamera zur Informationsgewinnung verarbeitet. Hier erfolgt also bereits eine Vorverarbeitung seitens der Bildaufnahmeeinrichtung selbst, indem beispielsweise relevante Informationen oder Merkmale aus den aufgenommenen Bilddaten extrahiert werden, beispielsweise Fahrspurbegrenzungen, Warnschilder, bestimmte Kanten oder Linien, die beispielsweise die Fahrbahn kreuzen etc. Diese extrahierten, vorverarbeiteten Informationen werden der Steuerungseinrichtung gegeben, die daraufhin die Bilder der fest verbauten Kamera in Bezug auf diese Vorverarbeitungsinformationen analysiert respektive eine Zuordnung vornimmt, um hierüber die dreidimensionale Steuerungsinformation zu gewinnen.

Neben dem Kraftfahrzeug selbst betrifft die Erfindung ferner ein Verfahren zum Betrieb eines Fahrerassistenzsystems eines Kraftfahrzeugs, wobei das Fahrerassistenzsystem eine Steuerungseinrichtung und eine das Fahrzeugvorfeld aufnehmende Kamera, deren Bilder seitens der Steuerungseinrichtung zur Erfassung von den Betrieb des Fahrerassistenzsystems zugrunde zu legenden Informationen verarbeitet werden, umfasst. Das Verfahren zeichnet sich erfindungsgemäß dadurch aus, dass nach Anordnung einer tragbaren Bildaufnahmeeinrichtung umfassend eine Kamera und eine Steuerungseinrichtung in einer windschutzscheibennahen Halterung eine Kommunikationsverbindung zwischen den beiden Steuerungseinrichtungen aufgebaut wird, wonach die dem Fahrerassistenzsystem zugehörige Steuerungseinrichtung die Steuerungseinrichtung der Bildaufnahmeeinrichtung zur Aufnahme von Bildern des Fahrzeugvorfelds ansteuert, wobei die Gewinnung von dreidimensionalen stereoskopischen Informationen durch Verarbeitung der Bilder beider Kameras erfolgt. Die endgültige Generierung dieser dreidimensionalen stereoskopischen Informationen erfolgt in jedem Fall seitens der Steuerungseinrichtung des Fahrerassistenzsystems, unabhängig davon, ob diese Steuerungseinrichtung nun unmittelbar die Bilder beider Kameras erhält und verarbeitet, oder ob seitens der Steuerungseinrichtung der Bildaufnahmeeinrichtung eine Vorverarbeitung zur Gewinnung von Vorverarbeitungsinformationen erfolgt.

Die Bildaufnahmeeinrichtung ist bevorzugt die Kamera eines Mobiltelefons, wobei die Steuerungseinrichtung des Mobiltelefons über eine drahtlose oder kabelgebundene Kommunikationsverbindung mit der Steuerungseinrichtung des Fahrerassistenzsystems kommuniziert.

Weitere Vorteile und Einzelheiten der Erfindung ergeben sich aus dem im Folgenden beschriebenen Ausführungsbeispiel sowie anhand der Zeichnung. Dabei zeigen:
- Fig. 1: eine Prinzipdarstellung eines erfindungsgemäßen Kraftfahrzeugs, und
- Fig. 2: eine Prinzipdarstellung einer Vorderansicht eines erfindungsgemäßen Kraftfahrzeugs.

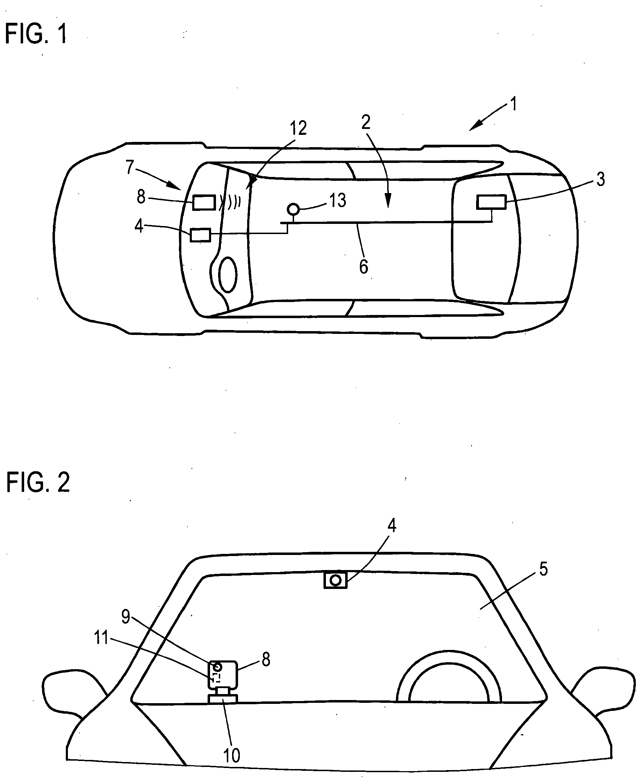

Fig. 1 zeigt eine Prinzipdarstellung eines erfindungsgemäßen Kraftfahrzeugs 1, umfassend ein Fahrerassistenzsystem 2 mit einer Steuerungseinrichtung 3 und einer das Fahrzeugvorfeld aufnehmenden, fest verbauten Kamera 4, die, siehe Fig. 2, hinter einer Windschutzscheibe 5 angeordnet ist. Die Steuerungseinrichtung 3 und die Kamera 4 hängen an einem Datenbus 6, der kraftfahrzeugseitig verbaut ist, und über den der Datenaustausch und die Steuerung erfolgt. Das Fahrerassistenzsystem kann ein Längs- und/oder Querführungssystem oder ein Warnsystem sein.

Vorgesehen ist des Weiteren eine zusätzliche, tragbare Bildaufnahmeeinrichtung 7, im gezeigten Beispiel ein Mobiltelefon 8 umfassend eine integrierte Kamera 9. Dieses Mobiltelefon 8 wird, siehe Fig. 2 über eine geeignete Halterung 10 ebenfalls im Bereich hinter der Windschutzscheibe lösbar angeordnet. Bei der Halterung 10 kann es sich beispielsweise um einen Saugfuß und Ähnliches handeln. Wie auch die Kamera 4 ist die Kamera 9 zum Fahrzeugvorfeld hin gerichtet, kann also, wenn mit ihr Bilder aufgenommen werden, das Fahrzeugvorfeld erfassen.

Zwischen dem Mobiltelefon 8, das natürlich eine, wie in Fig. 2 gestrichelt angedeutet ist, integrierte Steuerungseinrichtung 11 aufweist, und der Steuerungseinrichtung 3 des Fahrerassistenzsystems 1 wird nun eine Kommunikationsverbindung 12 aufgebaut, die im vorliegenden Beispiel drahtlos ist. Es handelt sich hierbei beispielsweise um eine Bluetooth-Verbindung. Am Fahrzeugbus 6 hängt eine entsprechende Sende- und Empfangseinheit 13, die die fahrzeugseitige Bluetooth-Schnittstelle bildet. Das Mobiltelefon 8 weist in an sich bekannter Weise eine entsprechende Bluetooth-Schnittstelle auf, so dass hierüber eine drahtlose Kommunikationsverbindung 12 aufgebaut werden kann. Die hierüber zu übertragenen Daten werden von der Steuerungseinrichtung 3 oder zur Steuerungseinrichtung 3 über den Fahrzeugbus 6 geführt.

Mit Aufbau der Kommunikationsverbindung 12 kann nun ein Datenaustausch zwischen der Steuerungseinrichtung 3 und dem Mobiltelefon 8 respektive der dortigen Steuerungseinrichtung 11 erfolgen. Die Steuerungseinrichtung 3 kann nun im Bildaufnahmebetrieb der Kamera 9 des Mobiltelefons 8 steuern, also die Bildaufnahme veranlassen. D. h., dass über die Kommunikations-verbindung 12 in das Fahrerassistenzsystem 2 nunmehr die Kamera 9 des Mobiltelefons 8 eingebunden ist, das Fahrerassistenzsystem 2 verfügt also über zwei Kameras, nämlich die fest verbaute Kamera 4 und die mobile Kamera 9.

Für den Steuerungsbetrieb synchronisiert sich die Steuerungseinrichtung 3 mit dem Mobiltelefon 8 respektive der dortigen Steuerungseinrichtung 11, so dass die Steuerungseinrichtung 3 die Kamera 9 des Mobiltelefons 8 entsprechend triggern kann. Gleichzeitig schaltet die Steuerungseinrichtung 3 automatisch in einen Stereoskopie-Modus, der die Auswertung der stereoskopischen Bilddaten zur Gewinnung der 3D-Informationen ermöglicht.

Wie Fig. 2 zeigt, sind die beiden Kameras 4 und 9 an unterschiedlichen Positionen verbaut, sie nehmen jedoch beide das Fahrzeugvorfeld auf. Das Fahrzeugvorfeld wird damit in leicht unterschiedlicher Weise über die jeweilige Kamera 4 und 9 abgebildet. Beide Kameras 4 und 9 bilden ein Stereoskopie-Kamera-System, nachdem die von ihnen aufgenommenen Bilder gemeinsam verarbeitet werden, um seitens der Steuerungseinrichtung 3 eine dreidimensionale stereoskopische Information, die der weiteren Steuerung des Fahrerassistenzsystem 2 zugrunde gelegt wird, zu generieren.

Hierzu besteht die Möglichkeit, dass die Steuerungseinrichtung 3 sowohl die kompletten Bilddaten der fest verbauten Kamera 4 als auch die kompletten Bilddaten der Kamera 9 des Mobiltelefons 8, übertragen über die Kommunikationsverbindung 12, empfängt und verarbeitet. In diesem Fall extrahiert die Steuerungseinrichtung 3 relevante Merkmale wie besondere Kanten, Graubereiche etc. in den jeweiligen Bildern und ordnet diese einander zu, um darauf gestützt die dreidimensionale Information respektive das dreidimensionale Umfeldmodul zu erzeugen und gestützt auf diese Information entsprechende Entscheidungen hinsichtlich des weitere Steuerungsvorgangs abzuleiten.

Alternativ ist es denkbar, dass die Steuerungseinrichtung 11 des Mobiltelefons 8 eine Vorverarbeitung der Bilder der Kamera 9 vornimmt und selbst die relevanten Merkmale in den Kamerabildern extrahiert, also Kanten detektiert, Graubereiche erfasst etc. Hierzu ist entweder eine entsprechende Applikation am Mobiltelefon 8 permanent zu hinterlegen, oder eine solche Applikation kann über die Kommunikationsverbindung 12 von der Steuerungseinrichtung 3 übertragen werden, nachdem sich das Mobiltelefon 8 angemeldet hat respektive die Synchronisation erfolgt ist.

Diese vorverarbeiteten Informationen werden sodann über die Kommunikationsverbindung 12 an die Steuerungseinrichtung 3 gegeben, die diese Vorverarbeitungsinformationen zusammen mit den Kamerabildinformationen der fest verbauten Kamera 4 zur Gewinnung der dreidimensionalen stereoskopischen Informationen verarbeitet.

Gestützt auf diese dreidimensionale Umfeldinformation kann nun ein dreidimensionales Modell der Umgebung erstellt werden und auf diese Weise entsprechende zu überfahrende Erhebungen erkannt werden, vor denen beispielsweise zu warnen ist, oder exakt die Höhe einer Unterführung berechnet werden, und mit der Ist-Höhe des Fahrzeugs verglichen werden kann, oder aber Engstellen exakt bestimmt und vermessen werden etc. Gestützt auf diese dreidimensionalen Rauminformation kann sodann das Fahrerassistenzsystem entsprechend gesteuert werden, wobei der Steuerungsumfang eindeutig größer ist als dies bei Auswertung von Bildern einer reinen Mono-Kamera der Fall wäre.

## Patentansprüche

1. Verfahren zum Betrieb eines Fahrerassistenzsystems eines Kraftfahrzeugs, wobei das Fahrerassistenzsystem eine Steuerungseinrichtung und eine das Fahrzeugvorfeld aufnehmende Kamera, deren Bilder seitens der Steuerungseinrichtung zur Erfassung von dem Betrieb des Fahrerassistenzsystem zugrunde zu legenden Informationen verarbeitet werden, umfasst,
**dadurch gekennzeichnet,**
**dass** nach Anordnung einer tragbaren Bildaufnahmeeinrichtung (7) umfassend eine Kamera (9) und eine Steuerungseinrichtung (11) in einer windschutzscheibennahen Halterung (10) eine Kommunikations-verbindung (12) zwischen den beiden Steuerungseinrichtungen (3, 11) aufgebaut wird, wonach die dem Fahrerassistenzsystem (2) zugehörige Steuerungseinrichtung (3) die Steuerungseinrichtung (11) der Bildaufnahmeeinrichtung (7) zur Aufnahme von Bildern des Fahrzeugvorfelds ansteuert, wobei die Gewinnung von dreidimensionalen stereoskopischen Informationen durch Verarbeitung der Bilder beider Kameras (4, 9) erfolgt, wobei die aufgenommenen Bilder seitens der Steuerungseinrichtung (11) der Bildaufnahmeeinrichtung (7) zur Gewinnung von aus den Bilddaten extrahierten Merkmalen als Vorverarbeitungsinformationen vorverarbeitet werden, wobei die Steuerungseinrichtung (3) des Fahrerassistenzsystems (2) die Vorverarbeitungs-informationen zusammen mit den Bildern der Kamera (4) zur Informationsgewinnung verarbeitet.

2. Verfahren nach Anspruch 1,
**dadurch gekennzeichnet,**
**dass** die Bildaufnahmeeinrichtung (7) die Kamera (9) eines Mobiltelefons (8) ist, wobei die Steuerungseinrichtung (11) des Mobiltelefons (8) über eine drahtlose oder kabelgebundene Kommunikationsverbindung (12) mit der Steuerungseinrichtung (3) des Fahrerassistenz-systems (2) kommuniziert.

3. Kraftfahrzeug, mit einem Fahrerassistenzsystem umfassend eine Steuerungseinrichtung und eine das Fahrzeugvorfeld aufnehmende Kamera, deren Bilder seitens der Steuerungseinrichtung zur Erfassung von dem Betrieb des Fahrerassistenzsystem zugrunde zu legenden Informationen verarbeitbar sind,
**dadurch gekennzeichnet,**
**dass** eine mittels einer Halterung (10) im Bereich der Windschutzscheibe (5) fixierbare tragbare Bildaufnahmeeinrichtung (7) umfassend eine Steuerungseinrichtung (11) über eine Kommunikations-verbindung (12) durch die Steuerungseinrichtung (3) des Fahrerassistenzsystems (2) zur Aufnahme von Bildern des Fahrzeugvorfelds, die zur Gewinnung von dreidimensionalen stereoskopischen Informationen zusammen mit Bildern der Kamera (4) verarbeitbar sind, ansteuerbar ist, wobei die aufgenommenen Bilder seitens der Steuerungseinrichtung (11) der Bildaufnahmeeinrichtung (7) zur Gewinnung von aus den Bilddaten extrahierten Merkmalen als Vorverarbeitungsinformationen vorverarbeitbar sind, wobei die Vorverarbeitungs-informationen zusammen mit den Bildern der Kamera (4) durch die Steuerungseinrichtung (3) des Fahrerassistenzsystems (2) zur Informationsgewinnung verarbeitbar sind, wobei die Steuerungseinrichtung (3) des Fahrerassistenzsystems (2) zur Durchführung eines Verfahrens gemäß Anspruch 1 oder 2 eingerichtet ist.

4. Kraftfahrzeug nach Anspruch 3,
**dadurch gekennzeichnet,**
**dass** die Bildaufnahmeeinrichtung (7) eine Kamera (9) eines Mobiltelefons (8) oder eine Digitalkamera ist.

5. Kraftfahrzeug nach Anspruch 3 oder 4,
**dadurch gekennzeichnet,**
**dass** die Kommunikationsverbindung (12) eine drahtlose Verbindung oder eine Kabelverbindung ist.

6. Kraftfahrzeug nach Anspruch 5,
**dadurch gekennzeichnet,**
**dass** die drahtlose Verbindung eine WLAN- oder Bluetooth-Verbindung und die Kabelverbindung eine USB-Verbindung ist.

## Claims

1. Method for operating a driver assistance system of a motor vehicle, wherein the driver assistance system comprises a control device and a camera which captures the area in front of the vehicle and whose images are processed by the control device to obtain information on which the operation of the driver assistance system is based,
**characterised in that**, following arrangement of a portable image capture device (7) comprising a camera (9) and a control device (11) in a mount (10) near the windscreen, a communication link (12) is built up between the two control devices (3, 11), after which the control device (3) associated with the driver assistance system (2) actuates the control device (11) of the image capture device (7) to capture images of the area in front of the vehicle, wherein three-dimensional stereoscopic information is obtained through processing of the images of both cameras (4, 9), wherein the captured images are preprocessed by the control device (11) of the image capture device (7) to obtain features extracted from the image data as preprocessing information, wherein the control device (3) of the driver assistance system (2) processes the preprocessing information together with the images of the camera (4) to obtain information.

2. Method according to claim 1,
**characterised in that** the image capture device (7) is the camera (9) of a mobile telephone (8), wherein the control device (11) of the mobile telephone (8) communicates with the control device (3) of the driver assistance system (2) via a wireless or cabled communication link (12).

3. Motor vehicle, having a driver assistance system comprising a control device and a camera which captures the area in front of the vehicle, whose images can be processed by the control device to obtain information on which the operation of the driver assistance system is based,
**characterised in that** a portable image capturing device (7), which can be secured in the region of the windscreen (5) by means of a mount (10), comprising a control device (11), can be actuated by the control device (3) of the driver assistance system (2) via a communication link (12) to capture images of the area in front of the vehicle which can be processed together with images of the camera (4) to obtain three-dimensional stereoscopic information, wherein the captured images can be preprocessed by the control device (11) of the image capture device (7) to obtain features extracted from the image data as preprocessing information, wherein the preprocessing information together with the images of the camera (4) can be processed by the control device (3) of the driver assistance system (2) to obtain information, wherein the control device (3) of the driver assistance system (2) is configured to perform a method according to claim 1 or 2.

4. Motor vehicle according to claim 3,
**characterised in that** the image capture device (7) is a camera (9) of a mobile telephone (8) or a digital camera.

5. Motor vehicle according to claim 3 or 4,
**characterised in that** the communication link (12) is a wireless link or a cable link.

6. Motor vehicle according to claim 5,
**characterised in that** the wireless link is a WLAN or Bluetooth link and the cable link is a USB link.

## Revendications

1. Procédé de fonctionnement d'un système d'assistance au conducteur d'un véhicule automobile, dans lequel le système d'assistance au conducteur comprend un dispositif de commande et une caméra enregistrant l'avant du véhicule, dont les images sont traitées au niveau du dispositif de commande pour la saisie d'informations à la base du fonctionnement du système d'assistance au conducteur,
**caractérisé en ce**
**qu'**après l'agencement d'un dispositif de prise d'image (7) portable comprenant une caméra (9) et un dispositif de commande (11) dans un support (10) à proximité d'un pare-brise, une liaison de communication (12) est établie entre les deux dispositifs de commande (3, 11), après quoi le dispositif de commande (3) appartenant au système d'assistance au conducteur (2) commande le dispositif de commande (11) du dispositif de prise d'image (7) pour l'enregistrement d'images de l'avant du véhicule, dans lequel l'obtention d'informations stéréoscopiques tridimensionnelles s'effectue par le traitement des images des deux caméras (4, 9), dans lequel les images enregistrées au niveau du dispositif de commande (11) du dispositif de prise d'image (7) sont prétraitées pour obtenir des caractéristiques extraites des données d'image en tant qu'informations de prétraitement, dans lequel le dispositif de commande (3) du système d'assistance au conducteur (2) traite les informations de prétraitement conjointement avec les images de la caméra (4) pour l'obtention d'informations.

2. Procédé selon la revendication 1,
**caractérisé en ce**
**que** le dispositif de prise d'image (7) est la caméra (9) d'un téléphone mobile (8), dans lequel le dispositif de commande (11) du téléphone mobile (8) communique par le biais d'une liaison de communication sans fil ou câblée (12) avec le dispositif de commande (3) du système d'assistance au conducteur (2).

3. Véhicule automobile, avec un système d'assistance au conducteur comprenant un dispositif de commande et une caméra enregistrant l'avant du véhicule, dont les images peuvent être traitées au niveau du dispositif de commande pour la saisie d'informations à la base du fonctionnement du système d'assistance au conducteur,
**caractérisé en ce**
**qu'**un dispositif de prise d'image (7) portable pouvant être fixé au moyen d'un support (10) dans la région du pare-brise (5) comprenant un dispositif de commande (11) peut être commandé par le biais d'une liaison de communication (12) par le dispositif de commande (3) du système d'assistance au conducteur (2) pour l'enregistrement d'images de l'avant du véhicule qui peuvent être traitées pour obtenir des informations stéréoscopiques tridimensionnelles conjointement avec les images de la caméra (4), dans lequel les images enregistrées au niveau du dispositif de commande (11) du dispositif de prise d'image (7) peuvent être prétraitées pour obtenir des caractéristiques extraites des données d'image en tant qu'informations de prétraitement, dans lequel les informations de prétraitement conjointement avec les images de la caméra (4) peuvent être traitées par le dispositif de commande (3) du système d'assistance au conducteur (2) pour l'obtention d'informations, dans lequel le dispositif de commande (3) du système d'assistance au conducteur (2) est conçu pour la réalisation d'un procédé selon la revendication 1 ou 2.

4. Véhicule automobile selon la revendication 3,
**caractérisé en ce**
**que** le dispositif de prise d'images (7) est une caméra (9) d'un téléphone mobile (8) ou une caméra numérique.

5. Véhicule automobile selon la revendication 3 ou 4,
**caractérisé en ce**
**que** la liaison de communication (12) est une liaison sans fil ou une liaison câblée.

6. Véhicule automobile selon la revendication 5,
**caractérisé en ce**
**que** la liaison sans fil est une liaison WLAN ou Bluetooth et la liaison câblée est une liaison USB.
